**Europäisches Patentamt**

**European Patent Office**

**Office européen des brevets**

(19)

(11) Veröffentlichungsnummer: **0 146 641**
**B1**

(12) **EUROPÄISCHE PATENTSCHRIFT**

(45) Veröffentlichungstag der Patentschrift:
**01.06.88**

(21) Anmeldenummer: **83110739.6**

(22) Anmeldetag: **27.10.83**

(51) Int. Cl.⁴: **D 21 D 5/02**

(54) **Sortiersieb für Fasersuspensionen.**

(30) Priorität: **11.10.83 DE 3336874**

(43) Veröffentlichungstag der Anmeldung:
**03.07.85 Patentblatt 85/27**

(45) Bekanntmachung des Hinweises auf die Patenterteilung:
**01.06.88 Patentblatt 88/22**

(84) Benannte Vertragsstaaten:
**AT DE FR GB IT SE**

(56) Entgegenhaltungen:
**FR - A - 2 516 563**
**US - A - 2 419 155**
**US - A - 3 581 903**

(73) Patentinhaber: **Hermann Finckh Maschinenfabrik GmbH & Co., Marktstrasse 185, D-7410 Reutlingen 1 (DE)**

(72) Erfinder: **Holz, Emil, Metzinger Strasse 51, D-7412 Eningen u.A. (DE)**

(74) Vertreter: **Hoeger, Stellrecht & Partner, Uhlandstrasse 14c, D-7000 Stuttgart 1 (DE)**

ACTORUM AG

## Beschreibung

Die Erfindung betrifft ein ringförmiges Sortiersieb für Fasersuspensionen, mit einer Siebwand, welche an ihrer Anströmungsseite Vertiefungen und an ihrer Abströmseite engere, als Bohrungen ausgebildete Sortieröffnungen aufweist, die in die Vertiefungen münden, welche sich jeweils über mehrere Sortieröffnungen erstrecken und allseitig in solchen Abständen voneinander angeordnet sind, dass die Siebwand auf der Anströmseite zwischen den Vertiefungen eine Netzstruktur aufweist.

Es ist schon ein Sortierer für Fasersuspensionen mit einem Sortiersieb der vorstehend erwähnten Art bekannt (FR-A-2 516 563), bei dem die Vertiefungen in der Draufsicht auf die Siebwand die Gestalt schmaler Rechtecke haben, an deren Grund, der einen Längsseitenwand benachbart, eine einzige Reihe von Bohrungen angeordnet ist. Zweck der Vertiefungen ist es – und sie müssen entsprechend gestaltet sein –, dass die zu sortierende Fasersuspension in die Vertiefungen mit einer Strömungsrichtung eintritt, die in der Draufsicht auf die Siebwand quer zur Längsrichtung der Vertiefungen ausgerichtet ist, jedoch von der einen äusseren Längskante der Vertiefungen aus schräg in die Vertiefungen hinein auf die gegenüberliegende innere Längskante der betreffenden Vertiefung zu verläuft, um an der durch diese innere Längskante begrenzten Wand der Vertiefung so reflektiert zu werden, dass die Fasersuspension anschliessend in die Bohrungen eintritt.

Durch diese Gestaltung sollte die Durchströmung der von den Bohrungen gebildeten Sortieröffnungen erleichtert werden, sie bedingt jedoch auch eine ganze Reihe von Nachteilen: rechteckige Vertiefungen lassen sich aus einem Blech praktisch nicht herausarbeiten, zumindest ist dies aber ausserordentlich umständlich und deshalb sehr teuer. Auch bedingen die Gestaltung dieses bekannten Sortiersiebs und der durch diese Gestaltung bewirkte Strömungsverlauf verhältnismässig grosse Abstände (in Umfangsrichtung des kreiszylindrischen Sortiersiebs) zwischen den ineinander benachbarten Vertiefungen liegenden Sortieröffnungen (sh. z.B. Figur 3 der FR-A-2 516 563), weshalb die Flächensumme der lichten Sieböffnungen und damit die Kapazität des bekannten Sortiersiebs verhältnismässig klein ist. Schliesslich führen die einander zugewandten Schmalseiten zweier einander benachbarter rechteckiger Vertiefungen zu einem schädlichen Kerbeffekt und damit zur Gefahr von Dauerbrüchen aufgrund der von Erhebungen eines Rotors des Sortierers in der Fasersuspension erzeugten Druckstösse.

Von der Firma Hermann Finckh Maschinenfabrik GmbH & Co. wurde ferner schon ein ringförmiges Sortiersieb für Fasersuspensionen vorgeschlagen (EP-Patentanmeldung 82 103 801.5 entsprechend der nicht vorveröffentlichten EP-A1-0 093 187), welches die Gestalt eines im wesentlichen kreiszylindrischen Siebkorbs für einen Drucksortierer besitzt. Dieser weist auf seiner die Anströmseite bildenden Aussenseite eine Vielzahl von in Umfangsrichtung verlaufenden, in sich geschlossenen feinen Nuten auf, deren Grund sich in Form feiner, parallel zueinander verlaufender Schlitze in kreiszylindrische Vertiefungen hinein öffnet, die von der Siebkorbinnenseite her in die Siebwand eingefräst worden sind und deren Zentren – in der Ansicht auf die flachgelegte Siebwand – die Ecken gleichseitiger Dreiecke bilden. Bei diesem bekannten Siebkorb haben die auf der Anströmseite liegenden feinen Sortieröffnungen demnach die Form von Schlitzen, und die Vertiefungen liegen auf der Abströmseite des Sortiersiebs. Zweck dieser Gestaltung war es, den der zu sortierenden Fasersuspension vom Sortiersieb entgegengesetzten Strömungswiderstand und damit die in einem Sortierer aufzuwendende Energie möglichst gering zu halten, weshalb angestrebt wurde, der Siebwand eine möglichst geringe Wandstärke zu geben, da der Strömungswiderstand mit der der Wandstärke entsprechenden Länge der von den Siebwandöffnungen gebildeten Kanäle zunimmt. Der Verminderung der Wandstärke eines Sortiersiebs sind jedoch bei Sortiergeräten wie Drucksortierern, Vibrationssortierern und sogenannten Wuchtschüttlern und dergleichen Grenzen gesetzt, weil das Sortiersieb sonst den im Betrieb des Sortiergeräts auftretenden Belastungen nicht standzuhalten vermag. Bei dem geschilderten Sortiersieb mit schlitzförmigen Sortieröffnungen und kreiszylindrischen Vertiefungen auf der Abströmseite ist der Strömungswiderstand infolge der in radialer Richtung kurzen Sortieröffnungen jedoch verhältnismässig gering, obwohl das Sortiersieb eine gute Druck- und Bruchfestigkeit aufweist.

Der Erfindung liegt die Aufgabe zugrunde, das bekannte Sortiersieb nach der FR-A-2 516 563 so zu verbessern, dass es eine grössere Stabilität aufweist und das Risiko des Entstehens von Dauerbrüchen vermindert wird. Diese Aufgabe wird erfindungsgemäss bei einem Sortiersieb der eingangs erwähnten Art dadurch gelöst, dass die Vertiefungen die Form kreiszylindrischer Ausnehmungen haben. Diese lassen sich leicht in die Siebwand einarbeiten, z.B. mittels eines Fräsers, was für die rechteckigen Vertiefungen der bekannten Siebwand nicht gilt, ausserdem besitzt bei dem erfindungsgemässen Sortiersieb die auf der Anströmseite zwischen den Vertiefungen vorhandene Netzstruktur eine Konfiguration ohne eine Kerbwirkung entfaltende Ecken, so dass das erfindungsgemässe Sortiersieb weit weniger dauerbruchgefährdet ist, wenn es in einem Sortierer eingesetzt wird, der über einen in der Nähe der Siebwand umlaufenden Rotor verfügt, welcher Druckstösse in der Fasersuspension erzeugt. Wenn, wie dies in Sortierern üblicherweise der Fall ist, die zu sortierende Fasersuspension auf der Anströmseite des Sortiersiebs eine Strömungskomponente parallel zur Anströmseite der Siebwand aufweist, so führt diese Strömungskomponente in Verbindung mit den auf der Anströmseite vorgesehenen kreiszylindrischen Vertiefungen zu einer Art Vorsortierung der Fasersuspension, auf

2

die dann die Feinsortierung durch die Bohrungen folgt. Infolge der Strömungskomponente der zu sortierenden Fasersuspension parallel zur Anströmseite der Siebwand erscheinen nämlich die kreiszylindrischen Vertiefungen für eine in der zu sortierenden Suspension befindliche Faser als Ausnehmungen kleinerer Abmessung in Strömungsrichtung, d.h. kleiner als der tatsächliche Durchmesser der Vertiefungen. Infolgedessen hindern die Vertiefungen nicht nur solche Schmutzpartikel, deren Länge oder Durchmesser grösser als der tatsächliche Durchmesser der Vertiefungen ist, am Eintreten in die Vertiefungen, sondern dies gilt wegen der scheinbaren Verkleinerung der Abmessungen der Vertiefungen in Richtung der besagten Strömungskomponente auch für Schmutzpartikel, deren Länge oder Durchmesser kleiner ist als der tatsächliche Durchmesser der Vertiefungen. Infolgedessen wird durch die auf der Anströmseite liegenden kreiszylindrischen Vertiefungen die Gefahr drastisch reduziert, dass die feinen, die Sortieröffnungen bildenden Bohrungen durch grosse Schmutzpartikel zugesetzt und blockiert werden. Schliesslich erzeugen die kreiszylindrischen Vertiefungen in Verbindung mit einer parallel zur Siebwandoberfläche verlaufenden Strömungskomponente in der zu sortierenden Fasersuspension unabhängig von der Richtung dieser Strömungskomponente Turbulenzen, durch die die Bildung eines Faservlieses auf der Anströmseite der Siebwand verhindert wird – ein solches Faservlies würde die Kapazität des Sortiersiebs erheblich vermindern. Gegenüber dem Sortiersieb nach der EP-A1-0 093 187 weist das erfindungsgemässe Sortiersieb den Vorteil einer besseren Sortierfeinheit auf, d.h. der auf der Abströmseite der Siebwand anfallende Teil der Fasersuspension besitzt eine höhere Güte, ganz abgesehen davon, dass beim Bohren der Sortieröffnungen weit weniger Zerspanungsarbeit geleistet werden muss als beim Fräsen der kreisringförmigen Nuten des bereits vorgeschlagenen Sortiersiebs. Auch schwächen derartige Nuten die Siebwand viel stärker als Sortieröffnungen in Form von Bohrungen. Auch besitzt das erfindungsgemässe Sortiersieb eine weit grössere freie Durchgangsfläche (Summe der lichten Sieböffnungsquerschnitte) als das Sortiersieb nach der FR-A-2 516 536.

Als besonders vorteilhaft haben sich solche Ausführungsformen des erfindungsgemässen Sortiersiebs erwiesen, bei denen die Restwandstärke der Siebwand am Grund der Vertiefungen höchstens gleich gross wie der Durchmesser der Sortieröffnungen ist.

Weitere Vorteile ergeben sich dann, wenn die Sortieröffnungen zylindrisch sind und an ihren von den Vertiefungen abgewandten Enden jeweils eine Ansenkung aufweisen oder wenn die Sortieröffnungen konisch sind. Dadurch wird ohne Verringerung der Sortierfeinheit der Strömungswiderstand weiter herabgesetzt, und wenn sich die Sortieröffnungen aufgrund der Ansenkung oder ihrer Konizität in Durchströmrichtung erweitern und auf der Auslasseite des Sortiersiebs Druckstösse erzeugt werden, z.B. im Falle eines Drucksortierers mit einem innerhalb oder ausserhalb eines Siebkorbs umlaufenden Rotor, so erfolgt eine Rückspülung der Sortieröffnungen, wodurch ein Verstopfen der letzteren wirksam verhindert wird.

Der vorstehend erwähnte doppelte Sortiereffekt, nämlich der Vorsortierung durch die auf der Anströmseite liegenden kreiszylindrischen Vertiefungen und der Feinsortierung durch die als Bohrungen ausgebildeten Sortieröffnungen, setzt, worauf ebenfalls schon hingewiesen wurde, eine parallel zur Siebwand orientierte Komponente der die Siebwand anströmenden Fasersuspension voraus; diese Strömungskomponente kann die Folge einer entsprechenden Orientierung der Einströmöffnung für die Fasersuspension in das Sortiergerät oder eines Rotors sein, der auf der Anströmseite des Siebkorbs umläuft. Bei den in Rede stehenden Drucksortierern empfiehlt es sich jedoch aus energetischen Gründen, den Rotor auf der den Vertiefungen abgewandten Seite der Siebwand, d.h. auf deren Abströmseite, umlaufen zu lassen, da dann die vom Rotor erzeugten, vorstehend beschriebenen Rückspülimpulse näher an den feinen, als Bohrungen ausgebildeten Sortieröffnungen erzeugt werden und nicht zunächst die Vertiefungen durchlaufen müssen, obwohl sie ihre Wirkung nur an den feinen Sortieröffnungen entfalten sollen; bei vorgegebener Stärke der Rückspülimpulse wird dann weniger Antriebsenergie für den Rotor benötigt. Grundsätzlich ist es aber auch denkbar, den Rotor auf beiden Seiten eines von dem Sortiersieb gebildeten Siebkorbs mit Reinigungsflügeln zu versehen.

Schliesslich wird noch empfohlen, die kreiszylindrischen Vertiefungen so anzuordnen, dass ihre Zentren – in der Ansicht auf die flachgelegte Siebwand – die Ecken gleichseitiger Dreiecke bilden, da dann die Siebwand in allen Richtungen besonders steif ist.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung einiger bevorzugter Ausführungsformen des erfindungsgemässen Sortiersiebs; in der Zeichnung zeigen:

Fig. 1: einen Axialschnitt durch einen Drucksortierer für ein erfindungsgemässes Sortiersieb;

Fig. 2: den Siebkorb dieses Drucksortierers in der Seitenansicht, teilweise jedoch aufgebrochen, wobei allerdings nicht alle Vertiefungen und Sortieröffnungen dargestellt wurden;

Fig. 3: den in Fig. 2 mit «A» gekennzeichneten Ausschnitt in grösserem Massstab;

Fig. 4: einen Schnitt nach der Linie 4–4 in Fig. 3;

Fig. 5: eine der Figur 4 entsprechende Darstellung einer zweiten Ausführungsform und

Fig. 6: eine der Figur 4 entsprechende Darstellung einer dritten Ausführungsform des erfindungsgemässen Sortiersiebs.

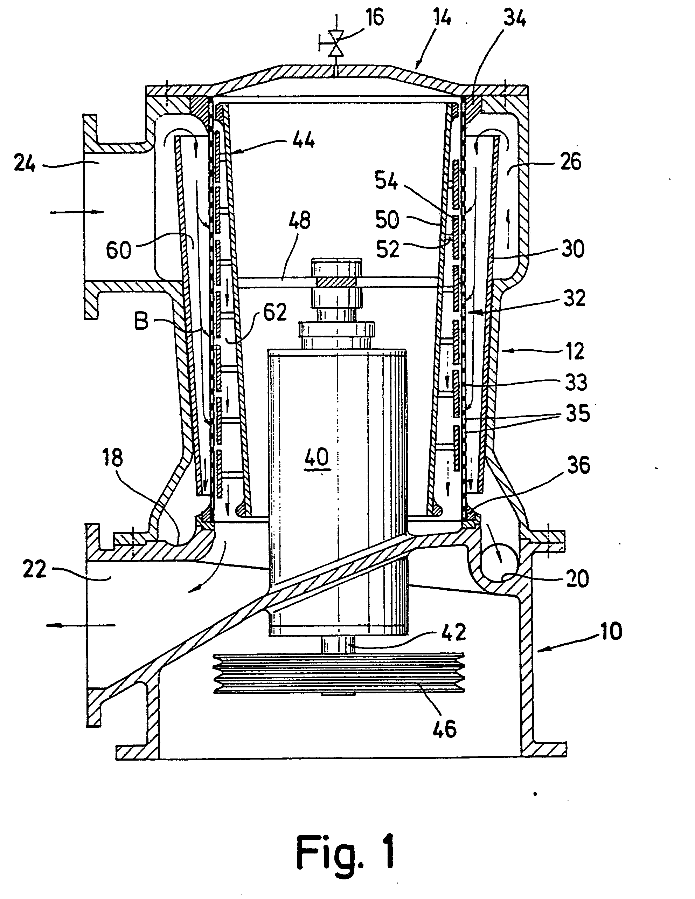

Die Fig. 1 zeigt ein Drucksortierer-Gehäuse, bestehend aus einem Gehäuseunterteil 10, einem Gehäuseoberteil 12 und einem Deckel 14, an dessen höchster Stelle ein Entlüftungsventil 16 eingebaut ist. Das Gehäuseunterteil 10 bildet eine sogenannte Spuckstoffrinne 18, die auf der Oberseite des Gehäuseunterteils umläuft und in einen Spuckstoffauslass 20 mündet. Desweiteren ist das Gehäuseunterteil mit einem Gutstoffauslass 22 versehen.

Das Gehäuseoberteil 12 besitzt einen Einlass 24 für die zu sichtende oder sortierende Fasersuspension, welcher in eine Einlauf-Ringkammer 26 mündet. In das Gehäuseoberteil 12 ist ein auswechselbarer Konus 30 eingesetzt, der sich nach unten verjüngt und sich nach oben bis in den oberen Bereich der Einlauf-Ringkammer 26 erstreckt; er umschliesst einen zylindrischen, im Gehäuseoberteil 12 stationär gehaltenen Siebkorb 32, dessen oberer und unterer Rand an gehäusefesten Ringen 34 und 36 befestigt ist. Der Siebkorb wird von einer zu einem Kreiszylinder geschlossenen Siebwand 33 gebildet, welche als Ganzes mit 35 bezeichnete Siebwandöffnungen aufweist.

Das Gehäuseunterteil 10 trägt einen Lagerkörper 40 für eine Achse 42 eines als Ganzes mit 44 bezeichneten Rotors, für dessen Antrieb am unteren Ende der Achse 42 eine Riemenscheibe 46 befestigt ist. Das obere Ende der Achse 42 trägt über ein Armkreuz 48 einen konischen Mantel 50 des Rotors, auf dessen Aussenseite über kurze Stege 52 mehrere kleine Reinigungsflügel 54 befestigt sind. Das Armkreuz 46 könnte aber auch mehrere, sich über die ganze Höhe des Siebkorbs 32 erstreckende Reinigungsflügel mit tragflügelartig gestaltetem Profil tragen. Wie an sich bekannt, sind die Reinigungsflügel 54 so gestaltet und angeordnet, dass sich auf der in Drehrichtung vorderen Seite der Reinigungsflügel im Spalt zwischen einem solchen Reinigungsflügel und dem Siebkorb ein positiver und an der rückwärtigen Flügelkante ein negativer Druckstoss ergibt; die dadurch in den Siebwandöffnungen 35 erzeugten Rückspül- und Spüleffekte sollen ein Verstopfen der Siebwandöffnungen verhindern.

Vorteilhafterweise verjüngt sich die von dem Konus 30 und dem Siebkorb 32 gebildete Einströmkammer 60 von oben nach unten, während sich gleichzeitig ein zwischen dem Siebkorb 32 und dem Rotormantel 50 gebildeter Ringraum 62 von oben nach unten erweitert. Das untere Ende der Einströmkammer 60 öffnet sich in die Spuckstoffrinne 18, während sich das untere Ende des Ringraums 62 in den Gutstoffauslass 22 hinein öffnet. Durch die geschilderte Gestaltung der Einströmkammer 60 erhält die durch den Drucksortierer zu behandelnde Fasersuspension in der Einströmkammer 60 eine Strömungsgeschwindigkeit mit relativ hoher vertikaler Geschwindigkeitskomponente.

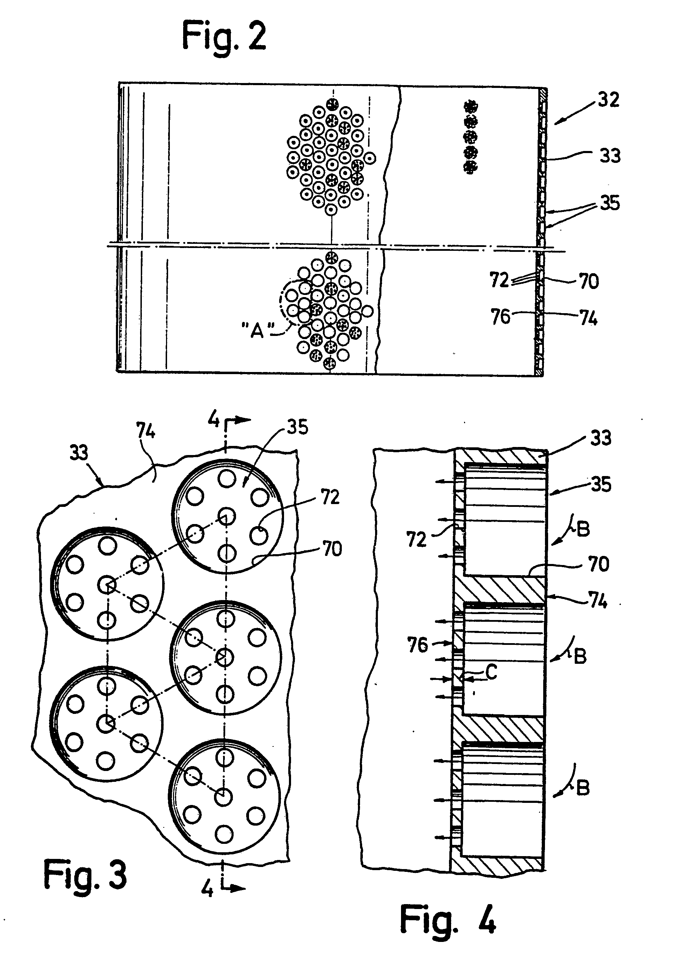

Wie die Fig. 2 bis 4 deutlich erkennen lassen, bestehen die Siebwandöffnungen 35 (sh. Fig. 1) aus kreiszylindrischen Vertiefungen 70 und mehreren Sortieröffnungen 72, wobei jeder Vertiefung 70 mehrere, als kreiszylindrische Bohrungen ausgebildete Sortieröffnungen 72 zugeordnet sind und die auf der Anströmseite 74 der Siebwand 33 zwischen den Vertiefungen 70 stehen gebliebenen Siebwandbereiche eine Netzstruktur bilden. Die Zentren der Vertiefungen 70 liegen dabei in den Ecken der in Fig. 3 strichpunktiert angedeuteten gleichseitigen Dreiecke. Wie sich aus den Fig. 2 bis 4 in Verbindung mit Fig. 1 ergibt, läuft der Rotor 44 bei der dargestellten, bevorzugten Ausführungsform eines Drucksortierers auf der Auslasseite 76 der Siebwand 33 um. Aus den vorstehenden Erläuterungen zur Einströmkammer 60 ergibt sich ferner, dass die Siebwand 33 von der zu sichtenden Fasersuspension ungefähr in Richtung der Pfeile B (sh. Fig. 4) angeströmt wird. Dadurch ergeben sich besonders vorteilhafte Verhältnisse: Einerseits erzeugt der Rotor 44 seine Druckstösse in unmittelbarer Nähe der freizuhaltenden und als enge Bohrungen ausgebildeten Sortieröffnungen 72, andererseits bewirken die verhältnismässig grossen, von den Vertiefungen 70 gebildeten Löcher eine Vorsortierung und verhindern die Ausbildung eines geschlossenen, auf der Anströmseite 74 der Siebwand 33 umlaufenden Faservlieses, welches als schädliches Filter besonders für lange Fasern wirken würde.

Der Rotor 44 könnte aber auch auf der Anströmseite der Siebwand umlaufen oder, wie an sich bekannt, auf beiden Seiten des Siebkorbs 32 Reinigungsflügel aufweisen.

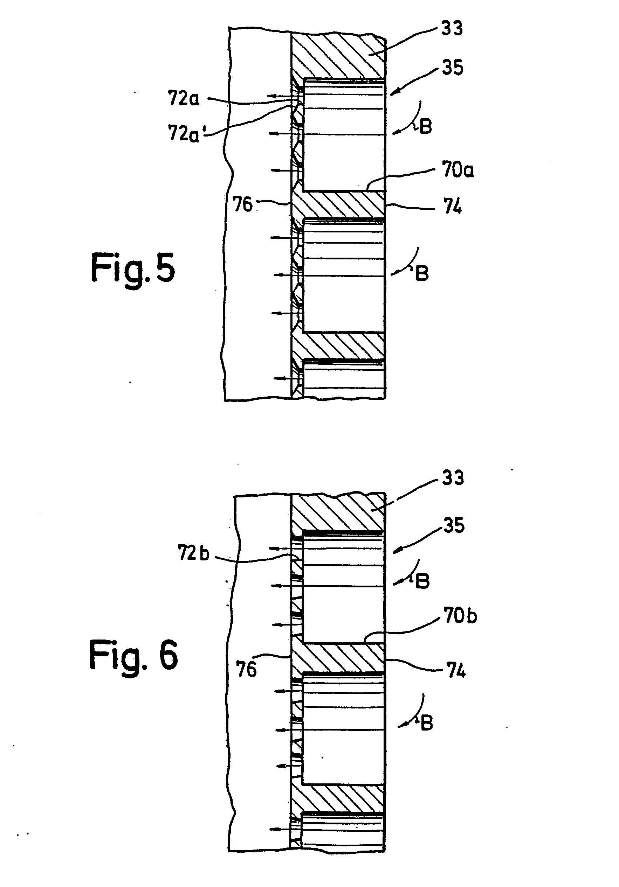

Die Ausführungsform gemäss Fig. 5 unterscheidet sich von derjenigen gemäss Fig. 4 nur dadurch, dass die wiederum als zylindrische Bohrungen ausgebildeten Sortieröffnungen 72a an ihrer von den Vertiefungen 70a abgewandten Seite jeweils mit einer Ansenkung 72a' versehen sind.

Bei der Ausführungsform nach Fig. 6 haben die Sortieröffnungen 72b die Gestalt konischer Bohrungen, die sich in Richtung auf die Vertiefungen 70b verjüngen; die Sortieröffnungen 72b könnten sich aber auch in Richtung auf die Vertiefungen 70b erweitern.

Im Hinblick auf den angestrebten geringen Strömungswiderstand werden Sortiersiebe bevorzugt, bei denen die Restwandstärke «C» (sh. Fig. 4) der Siebwand 33 am Grund der Vertiefungen 70 höchstens gleich gross wie der Durchmesser der Sortieröffnungen 72 ist. Entsprechendes gilt natürlich auch für die Ausführungsformen nach den Figuren 5 und 6.

**Patentansprüche**

1. Ringförmiges Sortiersieb für Fasersuspensionen, mit einer Siebwand, welche an ihrer Anströmseite Vertiefungen und an ihrer Abströmseite engere, als Bohrungen ausgebildete Sortieröffnungen aufweist, die in die Vertiefungen münden, welche sich jeweils über mehrere Sortieröffnungen erstrecken und allseitig in solchen Abständen voneinander angeordnet sind, dass die Siebwand auf der Anströmseite zwischen den Vertiefungen eine Netzstruktur aufweist, dadurch gekennzeichnet, dass die Vertiefungen (70) die Form kreiszylindrischer Ausnehmungen haben.

2. Sortiersieb nach Anspruch 1, dadurch gekennzeichnet, dass die Restwandstärke (C) der Siebwand (33) am Grund der Vertiefungen (70) höchstens gleich gross wie der Durchmesser der Sortieröffnungen (72) ist.

3. Sortiersieb nach Anspruch 1 oder 2, dadurch gekennzeichnet, dass die Sortieröffnungen (72a) zylindrisch sind und an ihrem von den Vertiefungen (70a) abgewandten Ende eine Ansenkung (72a') aufweisen.

4. Sortiersieb nach einem oder mehreren der Ansprüche 1 bis 3, dadurch gekennzeichnet, dass die Sortieröffnungen (72b) konisch sind.

5. Sortiersieb nach einem oder mehreren der Ansprüche 1 bis 4, dadurch gekennzeichnet, dass sich die Sortieröffnungen (72a, 72a'; 72b) in Durchströmrichtung erweitern.

6. Sortiersieb nach einem der Ansprüche 1 bis 5 für einen Drucksortierer mit längs der Siebwand umlaufendem Rotor, dadurch gekennzeichnet, dass die Vertiefungen (70) auf der dem Rotor (44) abgewandten Seite der Siebwand (33) angeordnet sind.

7. Sortiersieb nach einem der Ansprüche 1 bis 5 für einen Drucksortierer mit längs der Siebwand umlaufendem Rotor, dadurch gekennzeichnet, dass die Vertiefungen auf der dem Rotor zugewandten Seite der Siebwand angeordnet sind.

8. Sortiersieb nach einem oder mehreren der Ansprüche 1 bis 7, dadurch gekennzeichnet, dass die Zentren der Vertiefungen (70) – in der Ansicht auf die flachgelegte Siebwand (33) – die Ecken gleichseitiger Dreiecke bilden.

## Revendications

1. Tamis de triage, de forme annulaire, pour suspensions de fibres, comportant une paroi perforée, qui présente, sur son côté arrivée du flux, des niches et, sur son côté départ du flux, des ouvertures de triage plus étroites, réalisées sous forme de perçages qui débouchent dans les niches qui s'étendent chacune sur plusieurs ouvertures de triage et sont disposées, de tous côtés, à des distances, l'une de l'autre, telles que la paroi perforée présente, sur son côté arrivée du flux, entre les niches, une structure de réseau, caractérisé en ce que les niches (70) ont la forme d'évidements cylindriques à base circulaire.

2. Tamis de triage selon la revendication 1, caractérisé en ce que l'épaisseur résiduelle de paroi (C) de la paroi perforée (33) au fond des niches (70) est au maximum égale au diamètre des ouvertures de triage (72).

3. Tamis de triage selon la revendication 1 ou 2, caractérisé en ce que les ouvertures de triage (72a) sont cylindriques et présentent, à leur extrémité opposée aux niches (70a), un fraisage (72a').

4. Tamis de triage selon l'une ou plusieurs des revendications 1 à 3, caractérisé en ce que les ouvertures de triage (72b) sont coniques.

5. Tamis de triage selon l'une ou plusieurs des revendications 1 à 4, caractérisé en ce que les ouvertures de triage (72a, 72a'; 72b) vont en s'élargissant dans le sens du passage du flux.

6. Tamis de triage selon l'une des revendications 1 à 5 pour un tamis sous pression présentant un rotor tournant le long de la paroi perforée, caractérisé en ce que les niches (70) sont disposées, par rapport à la paroi perforée (33), du côté opposé au rotor (44).

7. Tamis de triage selon l'une des revendications 1 à 5 pour un tamis sous pression présentant un rotor tournant le long de la paroi perforée, caractérisé en ce que les niches sont disposées, par rapport à la paroi perforée, du côté rotor.

8. Tamis de triage selon une ou plusieurs des revendications 1 à 7, caractérisé en ce que les centres des niches (70) – vu sur la paroi perforée (33) développée à plat – forment les sommets de triangles équilatéraux.

## Claims

1. An annular sorting screen for fibrous suspensions, comprising a screen wall having recesses on its inflow side and narrower sorting apertures on its flow-off side, said apertures being designed as bores and opening into said recesses, said recesses each extending over a plurality of sorting apertures and being spaced in all directions from one another such that the screen wall has a net structure on said inflow side between said recesses, characterized in that said recesses (70) are circular-cylindrical in shape.

2. Sorting screen as defined in claim 1, characterized in that the thickness (C) of the screen wall (33) remaining at the base of said recesses (70) is at most equal to the diameter of said sorting apertures (72).

3. Sorting screen as defined in claims 1 or 2, characterized in that the sorting apertures (72a) are cylindrical and countersunk at their ends (72a') remote from the recesses (70a).

4. Sorting screen as defined in any or several of claims 1 to 3, characterized in that the sorting apertures (72b) are conical.

5. Sorting screen as defined in any or several of claims 1 to 4, characterized in that said sorting apertures (72a, 72a'; 72b) widen in the direction of flow.

6. Sorting screen as defined in any of claims 1 to 5 for a pressure sorter comprising a rotor rotating alongside the screen wall, characterized in that said recesses (70) are arranged on the side of the screen wall (33) remote from the rotor (44).

7. Sorting screen as defined in any of claims 1 to 5 for a pressure sorter comprising a rotor rotating alongside the screen wall, characterized in that the recesses are arranged on the side of the screen wall facing the rotor.

8. Sorting screen as defined in any or several of claims 1 to 7, characterized in that the centres of said recesses (70) form the corners of equilateral triangles – seen in the plan view onto the screen wall (33) when laid flat.

Fig. 1

# Fig. 2

# Fig. 3

# Fig. 4

Fig. 5

Fig. 6